# EUROPEAN PATENT APPLICATION

(11) **EP 4 545 498 A1**
(43) Date of publication of application: **30.04.2025**
(21) Application number: 23827022.7
(22) Date of filing: 09.06.2023
(51) Int. Cl.: C03B 37/014, C03B 37/018

(54) **MANUFACTURING METHOD OF OPTICAL FIBER PREFORM, AND OPTICAL FIBER PREFORM**

(30) Priority: 22.06.2022 JP 2022100529
(71) Applicant: SUMITOMO ELECTRIC INDUSTRIES, LTD., Osaka-shi, Osaka 541-0041 (JP)
(72) Inventor: DOI, Miho, Osaka-shi, Osaka 541-0041 (JP); TANAKA, Satoshi, Osaka-shi, Osaka 541-0041 (JP)
(74) Representative: TBK
(86) International application number: PCT/JP2023/021589
(87) International publication number: WO 2023/248836

(57) **Abstract**

A method for manufacturing an optical fiber preform includes producing a glass fine particle deposit including a glass rod having a glass body and a dummy rod connected to an end of the glass body, and a deposition portion in which glass fine particles are deposited on an outer peripheral surface of the glass rod; and sintering the glass fine particle deposit by heating them with a heater. In the producing, the glass fine particle deposit is produced such that the deposition portion includes a first deposition part on an outer peripheral surface of the glass body and a second deposition part on an outer peripheral surface of a portion of the dummy rod close to the glass body, and a thickness of the second deposition part along a second direction decreases as a distance from the first deposition part increases. In the sintering, heating with the heater is performed using a heat shielding jig so that the first deposition part is sintered to form transparent glass and the second deposition part remains unsintered to form opaque glass.

## Description

### Technical Field

The present disclosure relates to a method for manufacturing an optical fiber preform, and an optical fiber preform.

This application claims the benefit of priority from Japanese Patent Application No. 2022-100529, filed on June 22, 2022, the entire content of which is incorporated herein by reference.

### Background Art

In a method for manufacturing an optical fiber preform described in Patent Literature 1, a glass fine particle deposit including a glass rod and a tubular portion in which glass fine particles are deposited on the glass rod is heated and sintered to manufacture an optical fiber preform. The glass fine particle deposit has an effective portion and an ineffective portion. The effective portion is a portion that is drawn at a lower end of the optical fiber preform to become an optical fiber. The ineffective portion is an upper end that is not drawn as an optical fiber in the optical fiber preform. In the manufacturing method described in Patent Literature 1, an unsintered region in the ineffective portion of the optical fiber preform is reduced to thereby prevent cracking due to a difference in shrinkage between an unsintered portion and a sintered portion in the ineffective portion.

### Citation List

### Patent Literature

Patent Literature 1: Japanese Unexamined Patent Publication No. 2012-082127

### Summary of Invention

A method for manufacturing an optical fiber preform according to an embodiment of the present disclosure includes producing a glass fine particle deposit including a glass rod having a glass body extending in a first direction and a dummy rod connected to an end of the glass body, and a deposition portion in which glass fine particles are deposited on an outer peripheral surface of the glass rod; and sintering the glass fine particle deposit by heating the glass fine particle deposit with at least one heater. In the producing, the glass fine particle deposit is produced such that the deposition portion includes a first deposition part on an outer peripheral surface of the glass body and a second deposition part on an outer peripheral surface of a portion of the dummy rod close to the glass body, and a thickness of the second deposition part along a second direction intersecting the first direction decreases as a distance from the first deposition part increases. In the sintering, a heat shielding jig is disposed near a boundary between an exposed portion of the dummy rod and the second deposition part, the exposed portion being exposed to outside of the glass fine particle deposit, and heating with the heater is performed using the heat shielding jig so that the first deposition part is sintered to form transparent glass and the second deposition part remains unsintered to form opaque glass.

An optical fiber preform according to an embodiment of the present disclosure includes a glass rod extending in a first direction, and a tubular portion formed on an outer peripheral surface of the glass rod and made of silica glass. The glass rod includes a glass body extending in the first direction and a dummy rod connected to an end of the glass body. The tubular portion includes a first part formed on an outer peripheral surface of the glass body and a second part formed on an outer peripheral surface of the dummy rod, the second part having a smaller thickness along a second direction intersecting the first direction as a distance from the first part increases. The first part includes transparent glass. The second part is made of opaque glass.

### Brief Description of Drawings

[FIG. 1] FIG. 1 is a diagram illustrating a state of an optical fiber preform before sintering according to an embodiment.
[FIG. 2] FIG. 2 is a diagram illustrating an optical fiber preform according to an embodiment.
[FIG. 3] FIG. 3 is a diagram illustrating a configuration of a sintering furnace used in a method for manufacturing an optical fiber preform according to an embodiment.
[FIG. 4] FIG. 4 is a diagram illustrating a heat shielding jig used in the sintering furnace illustrated in FIG. 3.
[FIG. 5] FIG. 5 is a flowchart illustrating a method for manufacturing an optical fiber preform according to an embodiment.
[FIG. 6] FIG. 6 is a diagram illustrating a method for manufacturing an optical fiber preform according to a comparative example.
[FIG. 7] FIG. 7 is a diagram illustrating a method for manufacturing an optical fiber preform according to an embodiment.

### Description of Embodiments

### [Problem to be Solved by Present Disclosure]

Optical fibers are manufactured from optical fiber preforms manufactured by various methods. In the manufacture of such optical fibers, in order to reduce the manufacturing cost of the optical fibers, optical fiber preforms are becoming larger in size. Along with this, the weight of the optical fiber preforms has been increasing. In this case, it has been found by the present inventors that cracks occur in an ineffective portion in the conventional method for manufacturing an optical fiber preform.

For example, the optical fiber preform has a glass rod and a tubular portion. The glass rod is made of pure silica glass and includes an ineffective portion attached to an apparatus when the optical fiber preform is produced. The tubular portion is made of fluorine-doped silica glass and is formed on the outer peripheral surface of the glass rod. In such an optical fiber preform, the viscosity of the fluorine-doped silica glass is lower than the viscosity of the pure silica glass, and thus, the glass rod is distorted in the ineffective portion when the optical fiber preform is sintered and cooled. In addition, the fluorine-doped silica glass and the pure silica glass have different coefficients of thermal expansion, and thus, an interface between the glass rod and the tubular portion is distorted in the ineffective portion when the optical fiber preform is sintered and cooled. As described above, since distortion occurs in the ineffective portion, there is a possibility that cracking occurs in the ineffective portion that supports the weight of the optical fiber preform.

### [Effects of Present Disclosure]

The present disclosure can provide a method for manufacturing an optical fiber preform and an optical fiber preform, in which the occurrence of cracking in an ineffective portion can be prevented when the optical fiber preform is produced.

### [Description of Embodiments of Present Disclosure]

First, contents of embodiments of the present disclosure are listed and described.
(1) A method for manufacturing an optical fiber preform according to an embodiment includes producing a glass fine particle deposit including a glass rod having a glass body extending in a first direction and a dummy rod connected to an end of the glass body, and a deposition portion in which glass fine particles are deposited on an outer peripheral surface of the glass rod; and sintering the glass fine particle deposit by heating the glass fine particle deposit with at least one heater. In the producing, the glass fine particle deposit is produced such that the deposition portion includes a first deposition part on an outer peripheral surface of the glass body and a second deposition part on an outer peripheral surface of a portion of the dummy rod close to the glass body, and a thickness of the second deposition part along a second direction intersecting the first direction decreases as a distance from the first deposition part increases. In the sintering, a heat shielding jig is disposed near a boundary between an exposed portion, of the dummy rod, exposed to outside of the glass fine particle deposit and the second deposition part, and heating with the heater is performed so that the first deposition part is sintered to form transparent glass and the second deposition part remains unsintered to form opaque glass.
   In the method for manufacturing an optical fiber preform, the heat shielding jig is disposed near the boundary between the exposed portion of the dummy rod and the second deposition part, the exposed portion being exposed to the outside of the glass fine particle deposit. The heat shielding jig is used to perform heating with a heater so that the first deposition part is sintered to form transparent glass and the second deposition part remains unsintered to form opaque glass. According to such a method, the second deposition part is left unsintered without being sintered, and thus, it is possible to prevent the occurrence of distortion at the interface between the dummy rod and the second deposition part after the sintering due to the difference in viscosity or coefficient of thermal expansion in the optical fiber preform, and it is possible to prevent the occurrence of distortion at the ineffective portion when the optical fiber preform is manufactured. This prevents the occurrence of cracking in the ineffective portion that supports the optical fiber preform when the optical fiber preform is manufactured. As a result, it is possible to prevent the optical fiber preform from falling down due to cracking in the ineffective portion when the optical fiber preform is manufactured.
(2) In the method for manufacturing an optical fiber preform according to (1), in the sintering, the glass fine particle deposit may be so heated and sintered that a temperature of a heater, among the heaters, close to the second deposition part is 1400°C or higher and lower than 1450°C. According to such a method, for example, as compared with the case of sintering at a temperature of 1450°C or higher, only the first deposition part can be more reliably sintered without sintering the second deposition part.
(3) In the method for manufacturing an optical fiber preform according to (2), in the sintering, a difference between an inner diameter of at least one heater and an outer diameter of the glass fine particle deposit may be 500 mm or less.
(4) In the method for manufacturing an optical fiber preform according to any one of (1) to (3), at least one heater may include a first heater facing the first deposition part and a second heater facing the second deposition part. In the sintering, a heating temperature of the second heater may be set to be lower than a heating temperature of the first heater by at least 20°C. According to such a method, only the first deposition part can be more reliably sintered without sintering the second deposition part.
(5) In the method for manufacturing an optical fiber preform according to (4), the heating temperature of the first heater may be 1450°C or higher and 1500°C or lower. The heating temperature of the second heater may be 1400°C or higher and lower than 1450°C.
(6) In the method for manufacturing an optical fiber preform according to any one of (1) to (5), the dummy rod may be made of pure silica glass, and the deposition portion may be made of silica glass to which fluorine is added. According to such a method, an optical fiber with a very low transmission loss can be obtained.
(7) In the method for manufacturing an optical fiber preform according to any one of (1) to (6), the heat shielding jig may be disposed so that a distance from the boundary is 0 mm or more and 100 mm or less as viewed from the second direction.
(8) An optical fiber preform according to an embodiment of the present disclosure includes a glass rod extending in a first direction, and a tubular portion formed on an outer peripheral surface of the glass rod and made of silica glass. The glass rod includes a glass body extending in the first direction and a dummy rod connected to an end of the glass body. The tubular portion includes a first part formed on an outer peripheral surface of the glass body and a second part formed on an outer peripheral surface of the dummy rod, the second part having a smaller thickness along a second direction intersecting the first direction as a distance from the first part increases. The first part includes transparent glass. The second part is made of opaque glass.
   In the optical fiber preform, the first part includes transparent glass, and the second part is made of opaque glass. That is, unlike the first part, the second part remains unsintered and is an ineffective portion. According to such a configuration, the occurrence of distortion at the interface between the dummy rod and the second part due to the difference in viscosity or coefficient of thermal expansion is prevented. As a result, it is possible to prevent cracks in the ineffective portion that does not become an optical fiber at the time of drawing in the optical fiber preform.
(9) The optical fiber preform according to (8) may have a weight of 20 kg or more. According to such a configuration, the amount of the optical fiber that can be produced in one drawing increases, and therefore, the yield in drawing the optical fiber from the optical fiber preform is improved. Further, in a case where the weight of the optical fiber preform is increased, the distortion in the dummy rod becomes larger, so that cracking easily occurs in the ineffective portion when the optical fiber preform is sintered. However, in the optical fiber preform according to an embodiment of the present disclosure, the second part that is the ineffective portion remains unsintered, and therefore, the occurrence of cracking in the ineffective portion is prevented.
(10) In the optical fiber preform according to (8) or (9), an OH mass concentration of the dummy rod may be 10 ppm or less. According to such a configuration, for example, the dummy rod can be produced using electrically fused quartz glass, leading to reduction in manufacturing cost of the optical fiber preform. Further, in a case where the OH mass concentration of the dummy rod is reduced, the viscosity of the dummy rod is further increased and distortion tends to remain in the dummy rod, so that cracking tends to occur in the ineffective portion when the optical fiber preform is sintered. However, in the optical fiber preform according to an embodiment of the present disclosure, the second part that is the ineffective portion remains unsintered, and therefore, the occurrence of distortion in the ineffective portion is prevented. As a result, the occurrence of cracking is prevented in the ineffective portion.
(11) In the optical fiber preform according to any one of (8) to (10), the dummy rod may be made of pure silica glass, and the tubular portion may be made of silica glass to which fluorine is added. According to such a configuration, an optical fiber with a very low transmission loss can be obtained. Here, the coefficient of thermal expansion of silica glass to which fluorine is added is smaller than the coefficient of thermal expansion of pure silica glass, and thus, distortion tends to remain in the dummy rod. As a result, cracking is likely to occur in the ineffective portion when the optical fiber preform is sintered. However, in the optical fiber preform according to an embodiment of the present disclosure, the second part that is the ineffective portion remains unsintered, and therefore, the occurrence of distortion in the ineffective portion is prevented. As a result, the occurrence of cracking is prevented in the ineffective portion.

### [Details of Embodiment of Present Disclosure]

Specific examples of the method for manufacturing an optical fiber preform and an optical fiber preform according to the embodiment of the present disclosure will be described below with reference to the drawings. In the following description, the same reference signs will be used for the same elements or elements having the same functions, and the description will not be repeated to avoid redundancy. Note that, the present invention is not limited to these examples, but is indicated by the claims, and is intended to include all modifications within the meaning and scope equivalent to the claims. Hereinafter, a longitudinal direction of a glass fine particle deposit 10a and an optical fiber preform 20 is referred to as a first direction, and a radial direction that is a direction orthogonal to (intersecting) the longitudinal direction is referred to as a second direction.

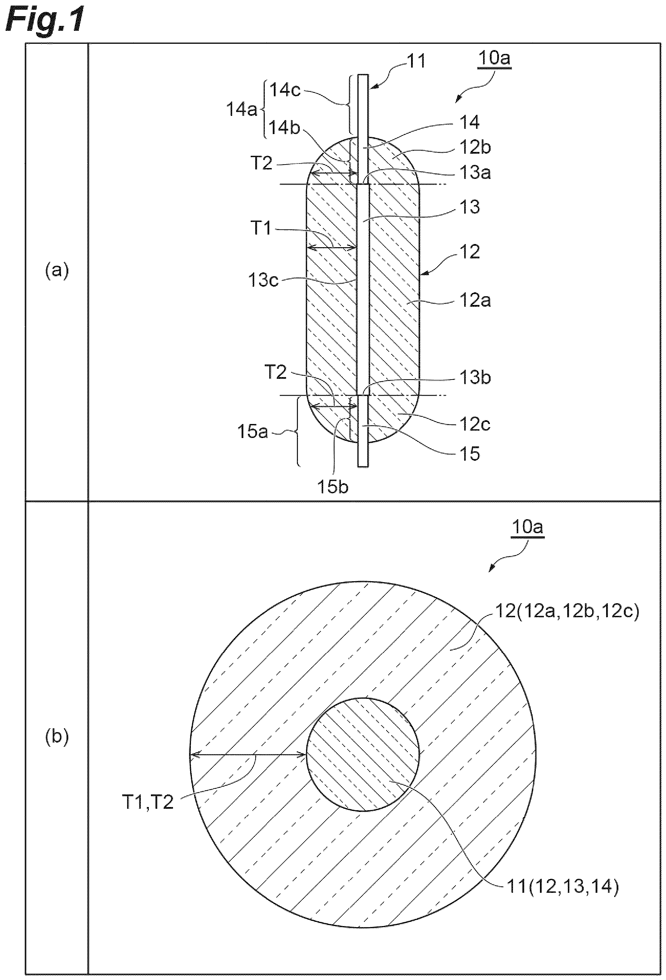

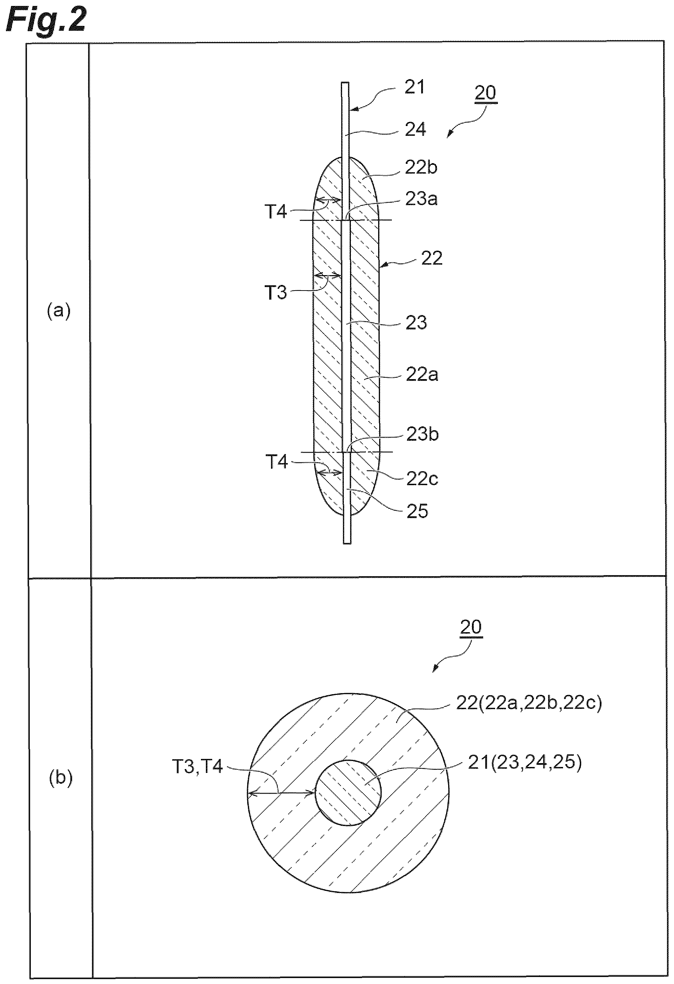

An example of an optical fiber preform manufactured by a manufacturing method according to an embodiment of the present disclosure will be described with reference to FIGS. 1 and 2. Part (a) of FIG. 1 is a cross-sectional view illustrating a cross section of the glass fine particle deposit 10a along the first direction, and part (b) of FIG. 1 is a cross-sectional view illustrating a cross section of the glass fine particle deposit 10a along the second direction. The glass fine particle deposit 10a has, for example, a circular cross section. The glass fine particle deposit 10a includes a glass rod 11 and a deposition portion 12. The diameter of the glass fine particle deposit 10a is, for example, 250 mm or more. The glass rod 11 extends in the longitudinal direction (first direction) and includes a glass body 13 and a pair of dummy rods 14 and 15. The glass body 13 includes a central portion that becomes a core of the optical fiber and a peripheral portion that becomes a part of cladding of the optical fiber. The central portion is made of, for example, pure silica glass or silica glass to which a trace amount of fluorine or chlorine is added. The peripheral portion is made of, for example, silica glass to which fluorine is added. One dummy rod 14 is connected to one end 13a of the glass body 13. The other dummy rod 15 is connected to the other end 13b of the glass body 13. The pair of dummy rods 14 and 15 is made of, for example, pure silica glass. Alternatively, the glass rod 11 may be a rod in which the glass body 13 and the pair of dummy rods 14 and 15 are integrated.

The deposition portion 12 is provided outside the glass rod 11 and is configured to surround the glass rod 11. The deposition portion 12 is made of silica glass to which fluorine is added. The deposition portion 12 includes a first deposition part 12a, a second deposition part 12b, and a third deposition part 12c. The first deposition part 12a is provided on the outer peripheral surface 13c of the glass body 13. The first deposition part 12a extends in the longitudinal direction, and for example, a thickness T1 thereof along the second direction is 110 mm. The second deposition part 12b is provided on a part of an outer peripheral surface 14a of the dummy rod 14, more specifically, on an outer peripheral surface 14b which is a part close to the glass body 13. The third deposition part 12c is provided on a part of an outer peripheral surface 15a of the dummy rod 15, more specifically, on an outer peripheral surface 15b which is a part close to the glass body 13. The second deposition part 12b and the third deposition part 12c are continuous with the first deposition part 12a. In the second deposition part 12b and the third deposition part 12c, a thickness T2 thereof along the second direction decreases as the distance from the first deposition part 12a increases. The dummy rod 14 has an exposed surface 14c (exposed portion) exposed to the outside of the glass fine particle deposit 10a in the dummy rod 14.

The optical fiber preform 20 is produced by sintering the glass fine particle deposit 10a illustrated in FIG. 1. Part (a) of FIG. 2 is a diagram illustrating an example of the optical fiber preform 20, and part (b) of FIG. 2 is a cross-sectional view illustrating a cross section of the optical fiber preform 20. The weight of the optical fiber preform 20 is, for example, 20 kg or more. The optical fiber preform 20 has a glass rod 21 and a tubular portion 22. The glass rod 21 is formed by sintering the glass rod 11. The glass rod 21 extends in the longitudinal direction. The glass rod 21 includes a glass body 23 and a pair of dummy rods 24 and 25. The glass body 23 includes a central portion that becomes a core of an optical fiber at the time of drawing in the optical fiber preform 20 and a peripheral portion that becomes a part of the cladding at the time of drawing in the optical fiber preform 20. The central portion is made of, for example, pure silica glass or silica glass to which a trace amount of fluorine or chlorine is added. The peripheral portion is made of, for example, silica glass to which fluorine is added. One dummy rod 24 is connected to one end 23a of the glass body 23. The other dummy rod 25 is connected to the other end 23b of the glass body 23. The dummy rods 24 and 25 are made of, for example, pure silica glass. The OH mass concentration of the dummy rods 24 and 25 is, for example, 10 ppm or less.

The tubular portion 22 is formed on the outer peripheral surface of the glass rod 21 and concentrically surrounds the glass rod 21. The tubular portion 22 is made of silica glass to which fluorine is added, for example. The tubular portion 22 has a first part 22a, a second part 22b, and a third part 22c. The first part 22a is formed by sintering the first deposition part 12a. The first part 22a is a portion that becomes the cladding of the optical fiber at the time of drawing in the optical fiber preform 20. The first part 22a surrounds the glass body 23. The first part 22a includes, for example, transparent glass. A thickness T3 of the first part 22a along the second direction is, for example, 40 mm. The second part 22b corresponds to the second deposition part 12b before the glass fine particle deposit 10a is sintered. The second part 22b and the third part 22c surround the dummy rods 24 and 25, respectively. In the second part 22b and the third part 22c, a thickness T4 thereof along the second direction decreases as the distance from the first part 22a increases. The second part 22b is, for example, entirely unsintered and made of opaque glass. The third part 22c corresponds to the third deposition part 12c before the glass fine particle deposit 10a is sintered. The third part 22c may be sintered or unsintered. In the present specification, "unsintered" is a "state in which a material is heated with a heater but has not yet reached transparent vitrification".

Based on the above, the glass body 23 and the first part 22a are effective portions that become optical fiber at the time of drawing in the optical fiber preform 20. The dummy rods 24 and 25, the second part 22b, and the third part 22c are ineffective portions that do not become optical fiber at the time of drawing in the optical fiber preform 20. The dummy rod 24 and the second part 22b are portions that support the optical fiber preform 20 with respect to the manufacturing apparatus and are portions to which the weight of the optical fiber preform 20 is directly applied when the optical fiber preform 20 is produced.

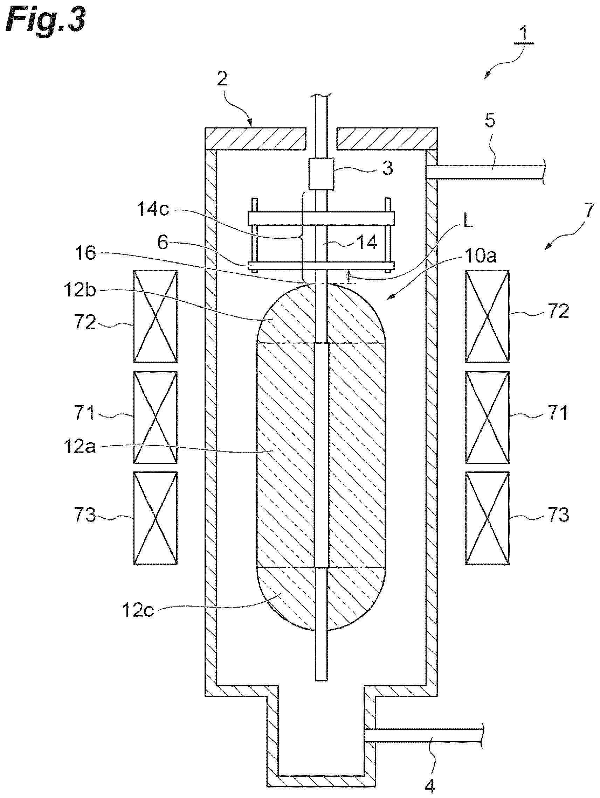

Next, an apparatus for manufacturing the optical fiber preform 20 according to an embodiment of the present disclosure will be described with reference to FIG. 3. FIG. 3 is a cross-sectional view illustrating an example of a sintering furnace 1 for manufacturing the optical fiber preform 20. The sintering furnace 1 includes a furnace core pipe 2, a coupling member 3, a supply portion 4, a discharge portion 5, a heat shielding jig 6, and a heater 7. The furnace core pipe 2 has, for example, a hollow cylindrical shape and houses the glass fine particle deposit 10a therein. The dummy rod 14 of the glass fine particle deposit 10a is fixed to the coupling member 3. The supply portion 4 is provided in a lower part of the furnace core pipe 2 and supplies inert gas such as He gas. The discharge portion 5 is provided in an upper part of the furnace core pipe 2 and discharges gas in the furnace core pipe 2.

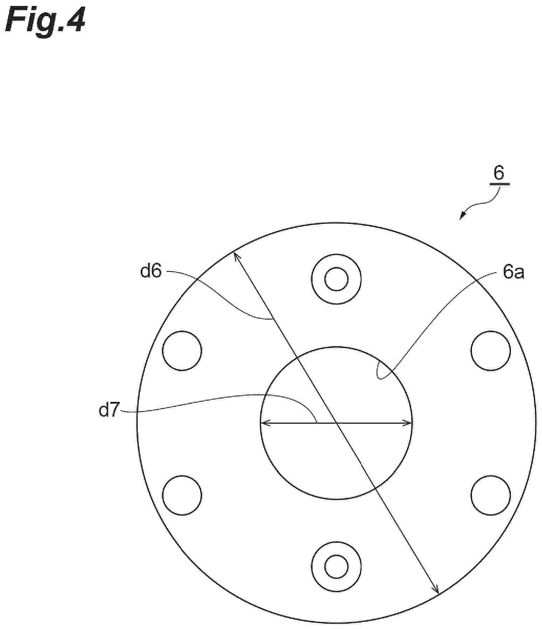

The heat shielding jig 6 is configured to be movable in the longitudinal direction of the glass fine particle deposit 10a. The heat shielding jig 6 does not need to be movable. The heat shielding jig 6 is disposed near a boundary 16 between the exposed surface 14c of the dummy rod 14 and the second deposition part 12b. The heat shielding jig 6 is disposed near the boundary 16 so as to overlap the exposed surface 14c as viewed from the second direction. "Disposed near the boundary 16" may mean as follows: the heat shielding jig 6 is so disposed that the distance L from the boundary 16 is, for example, 0 mm or more and 100 mm or less as viewed from the second direction. More preferably, the distance L may be 5 mm or more and 50 mm or less, and is, for example, 10 mm. The heat shielding jig 6 may be disposed below the boundary 16 when viewed from the second direction, and the distance L in this case is also the same as that described above. FIG. 4 is a diagram illustrating an example of the heat shielding jig 6. The heat shielding jig 6 has, for example, a circular plate shape. The heat shielding jig 6 is made of, for example, carbon. The heat shielding jig 6 is provided with a through hole 6a through which the dummy rod 14 passes. The through hole 6a has, for example, a circular shape. The heat shielding jig 6 has an outer diameter d6 of, for example, 100 mm or more and 400 mm or less. As for an inner diameter d7, a radius is, for example, 10 mm or more and 50 mm or less.

The heater 7 is provided outside the furnace core pipe 2 so as to surround the furnace core pipe 2. The heater 7 has, for example, an annular shape. The heater 7 has an inner diameter larger than an outer diameter of the furnace core pipe 2. The minimum value of the distance between the heater 7 and the glass fine particle deposit 10a may be 250 mm or less, for example, 200 mm or less. In this case, the difference between the inner diameter of the heater 7 and the outer diameter of the glass fine particle deposit 10a may be 500 mm or less, and may be, for example, 400 mm or less. The heater 7 includes, for example, a first heater 71, a second heater 72, and a third heater 73. The second heater 72, the first heater 71, and the third heater 73 are arranged in this order in a direction from the discharge portion 5 toward the supply portion 4 in the longitudinal direction of the furnace core pipe 2. The heater 7 may include four or more heaters, or may include two heaters. When the glass fine particle deposit 10a is accommodated in the furnace core pipe 2, the second heater 72 faces the second deposition part 12b provided near the coupling member 3, and the first heater 71 faces the first deposition part 12a. At this time, the third heater 73 faces at least one of the first deposition part 12a and the third deposition part 12c. The second heater 72 is close to the second deposition part 12b. The heating temperature of each of the heaters 71,72, and 73 is, for example, 1400°C or higher. The heating temperatures of the heaters 71,72, and 73 may be different from each other. For example, the heating temperature of the second heater 72 may be 1400°C or higher and lower than 1450°C. The heating temperature of each of the first heater 71 and the third heater 73 may be 1450°C or higher. The heating temperature of the second heater 72 may be set to be at least 20°C lower than the heating temperature of the first heater 71. The heating temperature of each of the first heater 71 and the third heater 73 may be 1500°C or higher. Such heaters 71,72, and 73 are configured with, for example, carbon heaters.

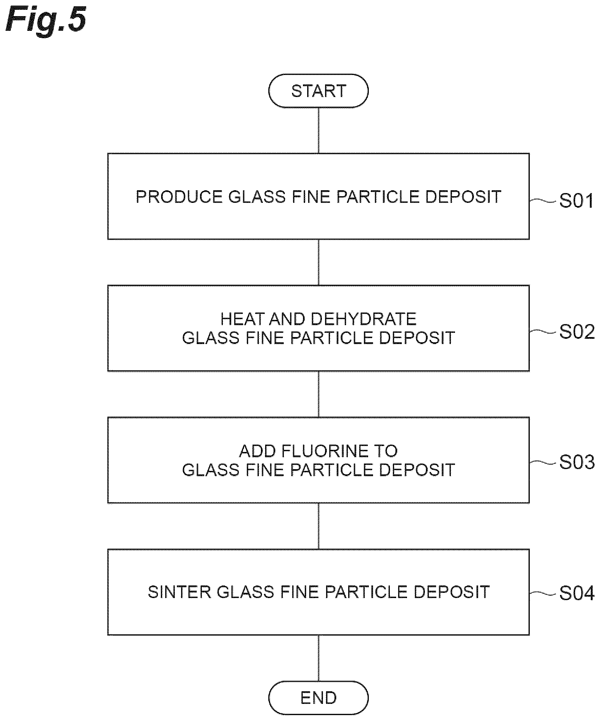

Next, a method for manufacturing the optical fiber preform 20 according to an embodiment of the present disclosure will be described with reference to FIG. 5. FIG. 5 is a flowchart illustrating a method for manufacturing an optical fiber preform. In order to manufacture the optical fiber preform 20, first, the glass fine particle deposit 10a described above is produced using a burner or the like (step S01).

In the step of producing the glass fine particle deposit 10a, the glass fine particle deposit 10a is produced by rotating and pulling up the target while depositing the glass fine particles around the target by using a vapor-phase axial deposition (VAD) method. More specifically, glass fine particles are generated from glass raw material gas in the flame of the burner, and the glass fine particles are deposited to produce the glass fine particle deposit 10a. The flame of the burner is obtained by combustion of combustible gas (for example, hydrogen) supplied to the burner.

In addition, in the step of producing the glass fine particle deposit 10a, the glass fine particles are deposited so that the deposition portion 12 including the first deposition part 12a, the second deposition part 12b, and the third deposition part 12c is formed. Specifically, first, the glass rod 11 in which the glass body 13 and the dummy rods 14 and 15 are integrated is prepared. Next, glass fine particles are deposited on the glass rod 11. Thereby, the glass fine particle deposit 10a is produced which has the first deposition part 12a on the glass body 13, and the second deposition part 12b and the third deposition part 12c on the dummy rods 14 and 15.

Subsequently, when the step of producing the glass fine particle deposit 10a is completed, the glass fine particle deposit 10a is disposed in the furnace core pipe 2, and a vitrification step including a step of heating and dehydrating the glass fine particle deposit 10a using the heater 7 (step S02), a step of adding fluorine to the glass fine particle deposit 10a (step S03), and a step of sintering the glass fine particle deposit 10a using the heater 7 (step S04) is executed. In the dehydration step, for example, the glass fine particle deposit 10a is heated at, for example, 1200°C to perform a dehydration treatment while supplying gas into the furnace core pipe 2, the gas containing dehydration gas of chlorine or a chlorine compound. In this way, the OH group in the glass fine particle deposit 10a is removed. In the dehydration step, heating with the heater 7 may be executed by rotating the glass fine particle deposit 10a, and the same applies to the fluorine addition step and the sintering step described later.

In the subsequent fluorine addition step, while supplying gas containing fluorine raw material gas such as silicon tetrafluoride (SiF₄), sulfur hexafluoride (SF₆), or carbon tetrachloride (CCl₄) into the furnace core pipe 2, the glass fine particle deposit 10a is heated at, for example, 1300°C to perform a fluorine addition treatment. In this way, fluorine is added into the glass fine particle deposit 10a.

In the subsequent sintering step, first, the heat shielding jig 6 is moved in the longitudinal direction of the glass fine particle deposit 10a, and is disposed near the boundary 16 between the exposed surface 14c of the dummy rod 14 and the second deposition part 12b so as to overlap the exposed surface 14c as viewed from the second direction (see FIG. 3). The heat shielding jig 6 may be disposed in such a manner before the dehydration step described above. Thereafter, the temperature of the heater 7 is further increased as compared with that in the fluorine addition step, and the glass fine particle deposit 10a is heated so that, for example, the heating temperature of each of the first heater 71 and the third heater 73 is 1450°C or higher and 1500°C or lower and the heating temperature of the second heater 72 is 1400°C or higher and lower than 1450°C. In this way, the glass fine particle deposit 10a is sintered to make the glass fine particle deposit 10a become transparent and vitrified. In the sintering step, the heating temperature of the second heater 72 is set to be lower than the heating temperatures of each of the first heater 71 and the third heater 73 by, for example, 20°C or more (see FIG. 3).

As described above, the heat shielding jig 6 is used to set the temperature of the second heater 72 to be lower than usual; thereby, the sintering step is performed so that the first deposition part 12a, which is the main part in the optical fiber preform, is sintered to obtain transparent glass and the second deposition part 12b, which is the support part at the time of producing the optical fiber preform, remains unsintered to obtain opaque glass. In this way, the optical fiber preform 20 illustrated in FIG. 2 is obtained. From such an optical fiber preform 20, an optical fiber can be obtained by performing drawing using a known drawing device.

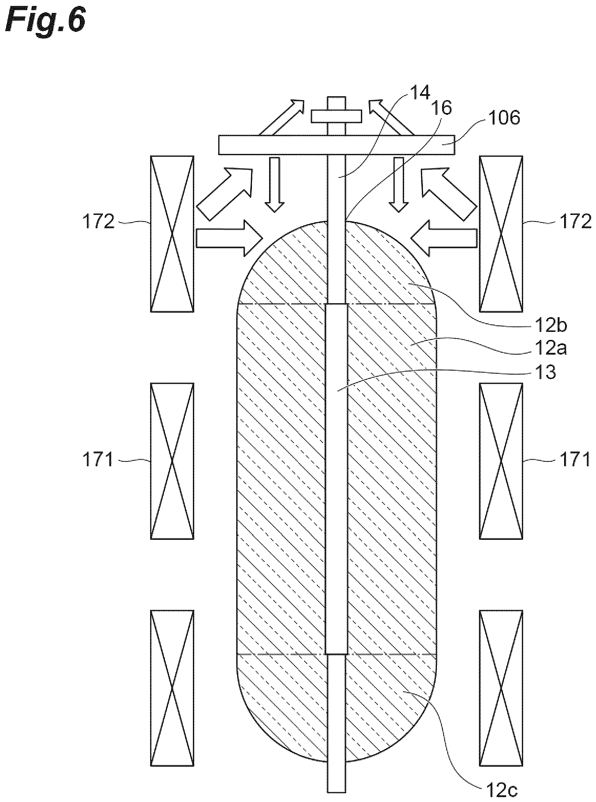

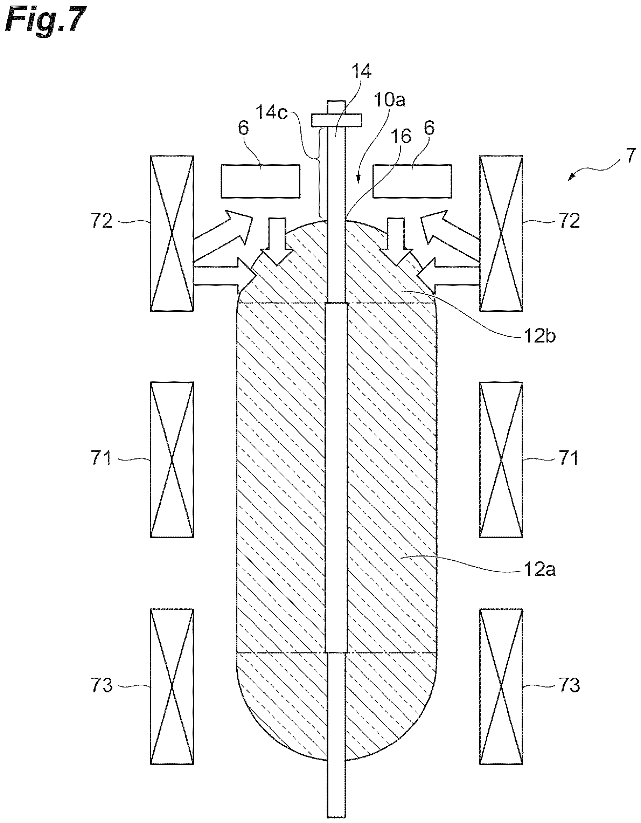

Hereinafter, the functional effects of the method for manufacturing an optical fiber preform according to the present embodiment will be described in comparison with a comparative example. FIG. 6 is a diagram illustrating a method for manufacturing an optical fiber preform according to the comparative example. FIG. 7 is a diagram illustrating a method for manufacturing an optical fiber preform according to the embodiment. In the comparative example, a heat shielding jig 106 is provided at a position away from the boundary 16 between the dummy rod 14 and the second deposition part 12b as viewed from the second direction. The heat shielding jig 106 is a glass disk made of quartz. In the comparative example, the reflection of heat by the heat shielding jig 106 is weak, and thus, the first deposition part 12a cannot be sintered unless the temperature of the second heater 172 is sufficiently increased. On the other hand, in a case where the temperature of the second heater 172 is increased, the second deposition part 12b close to the dummy rod 14 is also sintered to become glass. Thereby, a soot portion, which is the dummy rod 14, and the glass portion, which is the second deposition part 12b, are fixed to each other. As a result, distortion occurs between the dummy rod 14 as the ineffective portion and the second deposition part 12b, cracking occurs in the dummy rod 14 supporting the optical fiber preform, and the optical fiber preform may fall down during manufacturing.

In contrast to the comparative example, in the method for manufacturing the optical fiber preform 20 according to the present embodiment, the heat shielding jig 6 is disposed near the boundary 16 between the exposed surface 14c of the dummy rod 14 and the second deposition part 12b, the exposed surface 14c being exposed to the outside of the glass fine particle deposit 10a, and heating with the heater 7 is performed using the heat shielding jig 6 so as to sinter the first deposition part 12a and leave the second deposition part 12b unsintered. More specifically, as illustrated in FIG. 7, in the sintering step, the heating temperature of the second heater 72 disposed near the second deposition part 12b is set to be lower than usual so as not to sinter the second deposition part 12b, and heat from the second deposition part 12b is efficiently transferred to the first deposition part 12a by using reflection by the heat shielding jig 6 disposed close to the second deposition part 12b. As a result, even when the temperature of the second heater 72 is lower than, for example, the first heater 71 or the like or a normal set temperature by 50°C, the first deposition part 12a of the deposition portion 12 can be sintered. According to such a method, the first deposition part 12a to be used for drawing the optical fiber can be reliably sintered, and the second deposition part 12b close to the member supporting the optical fiber preform is not sintered, so that the occurrence of distortion at the interface between the dummy rod 14 and the second deposition part 12b is prevented, the occurrence of distortion being due to the difference in viscosity or coefficient of thermal expansion. As a result, the occurrence of distortion in the dummy rod 14 can be prevented to thereby prevent the optical fiber preform from falling down during manufacturing due to cracking occurring in the dummy rod 14 supporting the optical fiber preform. In addition, since the second deposition part 12b is unsintered, the rate of temperature drop after sintering of the first deposition part 12a is alleviated due to the heat insulating effect of the second deposition part 12b. As a result, the occurrence of distortion in the dummy rod 14 is prevented.

In the method for manufacturing the optical fiber preform 20 according to the present embodiment, in the sintering step, the glass fine particle deposit 10a is so heated and sintered that the temperature of the second heater 72 of the heater 7 close to the second deposition part 12b is 1400°C or higher and lower than 1450°C. According to such a configuration, for example, as compared with the case of sintering at a temperature of 1450°C or higher, only the first deposition part 12a can be more reliably sintered without sintering the second deposition part 12b.

Further, in the method for manufacturing the optical fiber preform 20 according to the present embodiment, in the sintering step, the temperature of the second heater 72 facing the second deposition part 12b may be set to be at least 20°C lower than the temperature of the first heater 71 facing the first deposition part 12a. According to such a configuration, only the first deposition part 12a can be more reliably sintered without sintering the second deposition part 12b close to the dummy rod 14.

In the method for manufacturing the optical fiber preform 20 according to the present embodiment, the dummy rods 14 and 15 are made of pure silica glass. In the production step, fluorine is added to the deposition portion 12. According to such a configuration, an optical fiber with a very low transmission loss can be obtained.

In the optical fiber preform 20 according to the present embodiment, the first part 22a includes transparent glass. The second part 22b is made of opaque glass. That is, unlike the first part 22a, the second part 22b remains unsintered and is the ineffective portion. According to such a configuration, the occurrence of distortion at the interface between the dummy rod 24 and the second part 22b is prevented, the occurrence of distortion being due to the difference in viscosity or coefficient of thermal expansion. As a result, it is possible to prevent cracks in the ineffective portion that does not become an optical fiber at the time of drawing in the optical fiber preform 20.

Further, the optical fiber preform 20 according to the present embodiment may have a weight of 20 kg or more. According to such a configuration, the amount of the optical fiber that can be produced in one drawing increases, and therefore, the yield in drawing the optical fiber from the optical fiber preform is improved. In a case where the weight of the optical fiber preform is increased, the distortion in the dummy rod becomes larger, so that cracking easily occurs in the ineffective portion when the optical fiber preform is sintered. However, in the optical fiber preform 20 according to the present embodiment, the second part that is the ineffective portion remains unsintered, and therefore, the occurrence of distortion in the ineffective portion is prevented. As a result, the occurrence of cracking is prevented in the ineffective portion.

Further, the optical fiber preform 20 according to the present embodiment, the OH mass concentration of the dummy rod 24 may be 10 ppm or less. According to such a configuration, for example, the dummy rod 24 can be produced using electrically fused quartz glass, leading to reduction in manufacturing cost of the optical fiber preform 20. Further, in a case where the OH mass concentration of the dummy rod is reduced, the viscosity of the dummy rod is further increased and distortion tends to remain in the dummy rod, so that cracking tends to occur in the ineffective portion when the optical fiber preform is sintered. However, in the optical fiber preform 20 according to the present embodiment, the second part 22b that is the ineffective portion remains unsintered, and therefore, the occurrence of distortion in the ineffective portion is prevented. As a result, the occurrence of cracking is prevented in the ineffective portion.

In the optical fiber preform 20 according to the present embodiment, the dummy rods 24 and 25 are made of pure silica glass, and fluorine is added to the tubular portion 22. According to such a configuration, an optical fiber with a very low transmission loss can be obtained. Here, the coefficient of thermal expansion of silica glass to which fluorine is added is smaller than the coefficient of thermal expansion of pure silica glass, and thus, distortion tends to remain in the dummy rods 14 and 15. As a result, cracking is likely to occur in the ineffective portion when the optical fiber preform 20 is sintered. However, in the optical fiber preform 20 according to an embodiment of the present disclosure, the second part 22b that is the ineffective portion remains unsintered, and therefore, the occurrence of distortion in the ineffective portion is prevented. As a result, the occurrence of cracking is prevented in the ineffective portion.

Although the method for manufacturing the optical fiber preform 20 and the optical fiber preform 20 according to the present disclosure have been described in detail above, the present invention is not limited to the above embodiments, and can be applied to various embodiments and modifications.

In the above embodiment, the heater 7 includes three heaters of the first heater 71, the second heater 72, and the third heater 73, but is not limited thereto. The heater 7 is only required to be a heater capable of heating and sintering the glass fine particle deposit 10a, and capable of sintering the first deposition part 12a to form transparent glass and leaving the second deposition part 12b unsintered to form opaque glass. For example, the heater 7 may include only the first heater 71 and the second heater 72 that are vertically longer than those in the above embodiment. For example, it is possible that the heater 7 is one heater extending along the longitudinal direction of the furnace core pipe 2 and is configured with a heater capable of changing the heating temperature for each place.

### Reference Signs List

- 1: Sintering furnace
- 2: Furnace core pipe
- 3: Coupling member
- 4: Supply portion
- 5: Discharge portion
- 6: Heat shielding jig
- 6a: Through hole
- 7: Heater
- 10a: Glass fine particle deposit
- 11: Glass rod
- 12: Deposition portion
- 12a: First deposition part
- 12b: Second deposition part
- 12c: Third deposition part
- 13: Glass body
- 13a, 13b: End
- 13c: Outer peripheral surface
- 14, 15: Dummy rod
- 14a, 14b, 15a, 15b: Outer peripheral surface
- 14c: Exposed surface (exposed portion)
- 16: Boundary
- 20: Optical fiber preform
- 21: Glass rod
- 22: Tubular portion
- 22a: First part
- 22b: Second part
- 22c: Third part
- 23: Glass body
- 23a: End
- 23b: End
- 24: Dummy rod
- 25: Dummy rod
- 71: First heater
- 72: Second heater
- 73: Third heater
- 106: Heat shielding jig
- 172: Second heater
- d6: Outer diameter
- d7: Inner diameter
- T1: Thickness
- T2: Thickness
- T3: Thickness
- T4: Thickness
- L: Distance

## Claims

1. A method for manufacturing an optical fiber preform, the method comprising:
producing a glass fine particle deposit including a glass rod having a glass body extending in a first direction and a dummy rod connected to an end of the glass body, and a deposition portion in which glass fine particles are deposited on an outer peripheral surface of the glass rod; and
sintering the glass fine particle deposit by heating the glass fine particle deposit with at least one heater,
wherein, in the producing, the glass fine particle deposit is produced such that the deposition portion includes a first deposition part on an outer peripheral surface of the glass body and a second deposition part on an outer peripheral surface of a portion of the dummy rod close to the glass body, and a thickness of the second deposition part along a second direction intersecting the first direction decreases as a distance from the first deposition part increases, and
wherein, in the sintering, a heat shielding jig is disposed near a boundary between an exposed portion of the dummy rod and the second deposition part, the exposed portion being exposed to outside of the glass fine particle deposit, and heating with the heater is performed using the heat shielding jig so that the first deposition part is sintered to form transparent glass and the second deposition part remains unsintered to form opaque glass.

2. The method for manufacturing an optical fiber preform according to claim 1,
wherein, in the sintering, the glass fine particle deposit is sintered by being heated that a temperature of a heater, of the heater, close to the second deposition part is 1400°C or higher and lower than 1450°C.

3. The method for manufacturing an optical fiber preform according to claim 2,
wherein, in the sintering, a difference between an inner diameter of the at least one heater and an outer diameter of the glass fine particle deposit is 500 mm or less.

4. The method for manufacturing an optical fiber preform according to any one of claims 1 to 3,
wherein the at least one heater includes a first heater facing the first deposition part and a second heater facing the second deposition part, and
wherein, in the sintering, a heating temperature of the second heater is set to be lower than a heating temperature of the first heater by at least 20°C.

5. The method for manufacturing an optical fiber preform according to claim 4,
wherein the heating temperature of the first heater is 1450°C or higher and 1500°C or lower, and
wherein the heating temperature of the second heater is 1400°C or higher and lower than 1450°C.

6. The method for manufacturing an optical fiber preform according to any one of claims 1 to 3,
wherein the dummy rod is made of pure silica glass, and
wherein the deposition portion is made of silica glass to which fluorine is added.

7. The method for manufacturing an optical fiber preform according to any one of claims 1 to 3,
wherein the heat shielding jig is disposed so that a distance from the boundary is 0 mm or more and 100 mm or less as viewed from the second direction.

8. An optical fiber preform comprising:
a glass rod extending in a first direction; and
a tubular portion formed on an outer peripheral surface of the glass rod and made of silica glass,
wherein the glass rod includes a glass body extending in the first direction and a dummy rod connected to an end of the glass body,
wherein the tubular portion includes a first part formed on an outer peripheral surface of the glass body and a second part formed on an outer peripheral surface of the dummy rod, the second part having a smaller thickness along a second direction intersecting the first direction as a distance from the first part increases,
wherein the first part includes transparent glass, and the second part is made of opaque glass.

9. The optical fiber preform according to claim 8,
wherein the optical fiber preform has a weight of 20 kg or more.

10. The optical fiber preform according to claim 8 or 9,
wherein an OH mass concentration of the dummy rod is 10 ppm or less.

11. The optical fiber preform according to claim 8 or 9,
wherein the dummy rod is made of pure silica glass, and the tubular portion is made of silica glass to which fluorine is added.
